# EUROPEAN PATENT APPLICATION

(11) **EP 1 607 956 A2**
(43) Date of publication of application: **21.12.2005**
(21) Application number: 05104286.9
(22) Date of filing: 19.05.2005
(51) Int. Cl.: G11B 15/32, G11B 25/06

(54) **Reel cover for tape deck chassis**

(30) Priority: 17.06.2004 KR 2004044840
(71) Applicant: SAMSUNG ELECTRONICS CO., LTD., Suwon 442-742, Gyeonggi-do (KR)
(72) Inventor: Seo, Jae-kab, Yeongtong-gu,Suwon-si Gyeonggi-do (KR); Oh, Jeong-hyeob, Dongan-gu,Anyang-si Gyeonggi-do (KR); Sim, Jae-hoon, Yeongtong-gu,Suwon-si Gyeonggi-do (KR); Park, Byeng-bae, Gyeonggi-do (KR); Lee, Seung-woo, Yeongtong-gu,Suwon-si Gyeonggi-do (KR); Choi, Hyeong-seok, 1052-2,Yeongtong-gu,Suwon-si Gyeonggi-do (KR)
(74) Representative: Geary, Stuart Lloyd

(57) **Abstract**

A reel cover of a magnetic recording/reproducing apparatus having an improved assembly construction with respect to a chassis and a method of manufacturing thereof provide -a reel cover assembled with the chassis in a manner where a plurality of protrusions of a reel cover body are inserted in a plurality of recesses formed on the chassis. In this state, a resilient member formed at the reel cover body resiliently contacts a side surface of the chassis so that the protrusions are kept within the recesses. The reel cover can be assembled with the chassis in a simple manner without requiring extra securing means such as screws. Accordingly, the number of assembly parts can be decreased and the assembly procedure may be simplified, thereby productivity may be improved and manufacturing cost may be reduced.

## Description

The present invention relates to a tape deck comprising a chassis, first and second reel tables, a gear movable between the first and the second reel table and a cover over the movable gear.

A magnetic recording/playback apparatus records video and audio data onto a recording medium such as a magnetic tape and plays back the recorded data from the recording medium. Examples of magnetic recording/playback apparatuses include VCRs (Video Cassette tape Recorders) and camcorders.

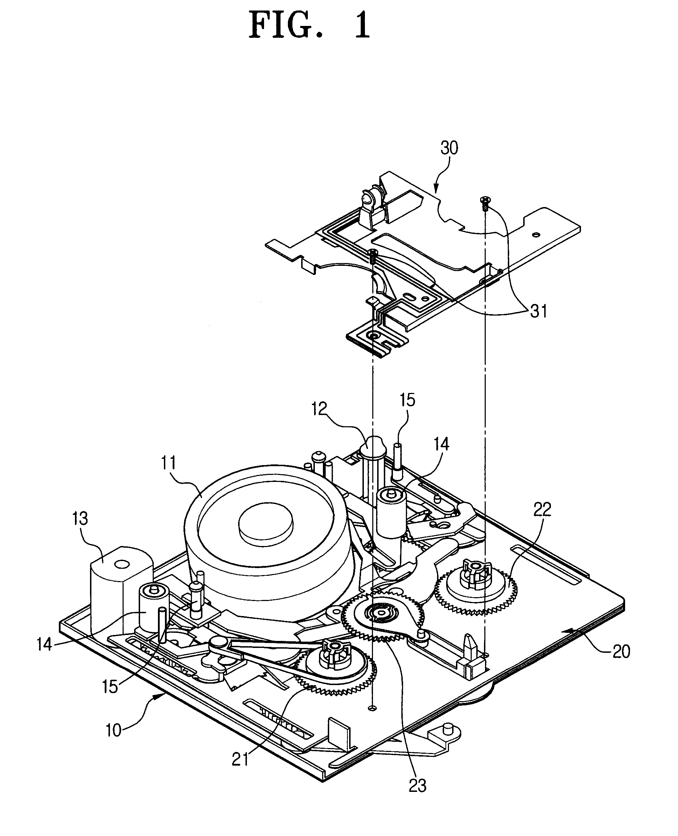

Referring to Figure 1, the deck of the known magnetic recording/playback apparatus comprises a main chassis 10 and a sub-chassis 20. A head drum 11, a capstan motor 12, a loading motor 13 and tape running guide means including a plurality of guide rollers 14 and a guide pole 15 are located on the main chassis 10.

The sub-chassis 20 is slidably disposed on the main chassis 10. A pair of reel tables 21 and 22 onto which a tape cassette is mounted, an idle gear assembly 23 which selectively transmits the driving force from the capstan motor 12 to the reel tables 21 and 22, and a reel cover 30 for supporting the idle gear assembly 23 are all located on the sub-chassis 20.

The reel cover 30 is coupled to the sub-chassis 20 using a plurality of screws 31. The screws 31 firmly secure the idle gear assembly 23 to stop it moving out of it's normal position.

However, because the reel cover 30 is connected to the sub-chassis 20 by the plurality of screws 31, the deck of the known magnetic recording/reproducing apparatus has an increased number of parts to be assembled which further complicates the assembly procedure. Consequently, production decreases and manufacturing costs increase. This is particularly the case of a compact-sized magnetic recording/playback apparatus where competitive productivity and price are important.

The present invention has been developed to address at least the above problems in the related art. Accordingly, an object of the present invention is to provide a reel cover of a magnetic recording/reproducing apparatus, which is capable of being assembled with a chassis in a simple manner without requiring separate securing means such as a screw.

The present invention relates to a tape deck comprising a chassis, first and second reel tables, a gear movable between the first and the second reel table and a cover over the movable gear.

A tape deck according to the present invention is characterised in that said cover is shaped for fixedly engaging the chassis.

Other additional and/or preferred features are set forth in claims 2 to 5 appended hereto.

An embodiment of the present invention will now be described, by way of example only, and with reference to Figure 2 to 5 of the accompanying drawings, in which:
Figure 1 shows a perspective view of a deck of a known magnetic recording/playback apparatus;
Figure 2 shows a perspective view of a deck employing a reel cover according to an embodiment of the present invention;
Figure 3 is a bottom view showing the reel cover of Figure 2; and
Figures 4 and 5 are views respectively showing an example of the reel cover and the chassis before and after the assembling.

Throughout the drawing figures, it will be understood that like reference numerals refer to like elements, features and structures.

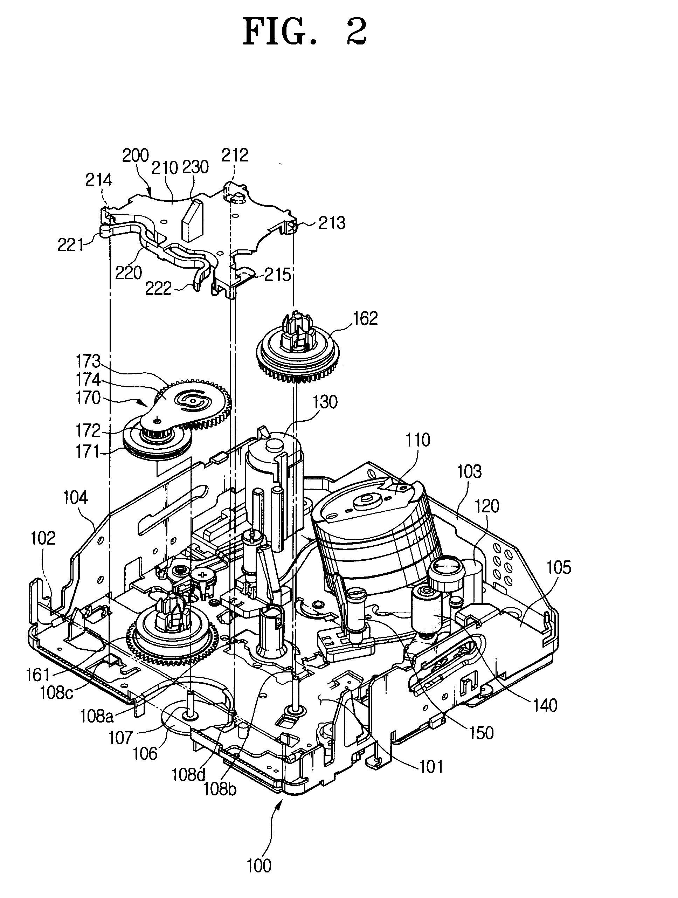

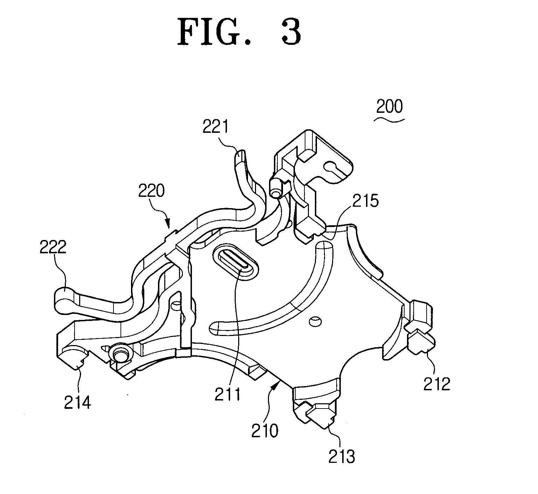

Referring to Figures 2 and 3, the deck comprises a chassis 100 and a reel cover 200.

As shown in Figure 2, the chassis 100 comprises a bottom surface 101 and four side surfaces 102 to 105 upwardly extending from the bottom surface 101.

A head drum 110, a capstan motor 120, a loading motor 130 and tape running guide means including a guide roller 140 and a guide pole 150 are located on the bottom surface 101 of the chassis 100.

A pair of reel tables 161 and 162 are rotatably disposed on the bottom surface 101 of the chassis 100, and a tape cassette (not shown) is mounted on the reel tables 161 and 162. An idle gear assembly 170 is also located on the bottom surface 101 of the chassis 100, which selectively transmits the driving force from the capstan motor 120 to the reel tables 161 and 162.

The idle gear assembly 170 engages with a shaft 107 of a gear sheet 106 provided between the reel tables 161 and 162 and on the bottom surface 101 of the chassis 100. An idle pulley 171 of the idle gear assembly 170 is connected to the capstan motor 120 using a belt (not shown). A first idle gear 172 and a second idle gear 173 engage with each other in an arm 174. The second idle gear 173 is swung according to the rotation of the first idle gear 172. The second idle gear 173 engages with either of the reel tables 161 and 162 so that the reel tables 161 and 161 are selectively driven.

The reel cover 200 is located on the bottom surface 101 of the chassis 100 and between the reel tables 161 and 162. The reel cover 200 firmly secures the idle gear assembly 170 to stop it moving out of its normal position.

As shown in Figures 2 and 3, the reel cover 200 comprises a reel cover body 210 and a resilient member 220.

The reel cover body 210 has a shaft supporting recess 211 (see Figure 3) defined therein for receiving and supporting the shaft 107 of the idle gear assembly 170. The reel cover body 210 also has a plurality of protrusions 212 to 215 defined thereon for assembly with the chassis 100. The shaft supporting recess 211 has a substantially oval shape. Thus, the reel cover 200 is only able to move by an amount equal to the length of the shaft supporting recess 211 when being connected to, or removed from, the chassis 100.

The plurality of protrusions 212 to 215 are located in and held by a plurality of recesses 108a to 108d formed in predetermined positions along the bottom surface 101 of the chassis 100. These positions correspond to assembled positions of the reel cover 200 which is between the reel tables 161 and 162. The recesses 108a to 108d each have at least one opening through which front ends of the protrusions 212 to 215 are inserted in and held by the recesses 108a to 108d.

The resilient member 220 is formed on the reel cover body 210 for resiliently supporting the reel cover body 210, thus keeping the protrusions 212 to 215 formed on the reel cover body 210 from moving out of the recesses 108a to 108d.

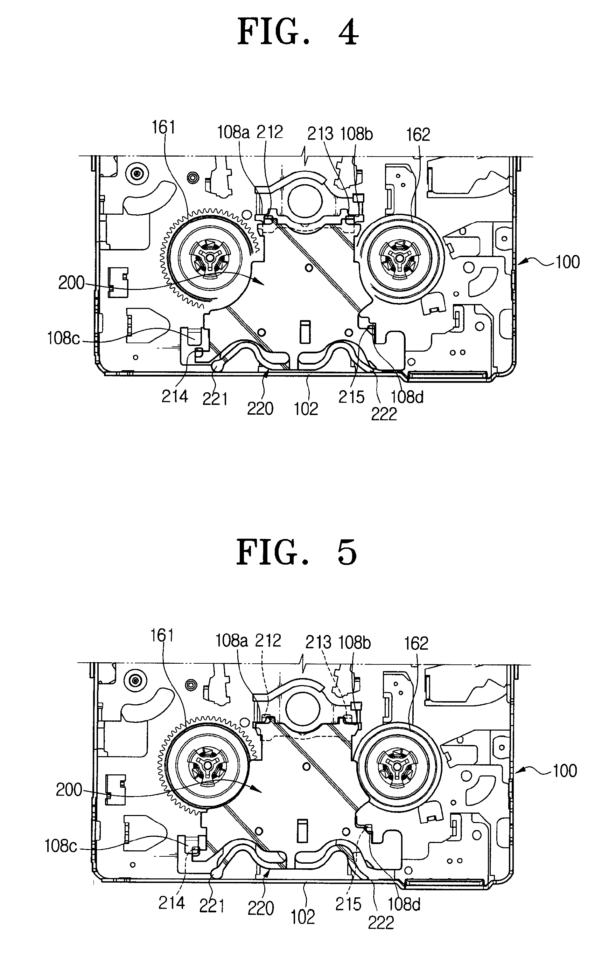

As shown in Figures 4 and 5, the resilient member 220 comprises a pair of resilient flanks 221 and 222 resiliently contacting the side surface 102 of the chassis 100. The reel cover body 210 is resiliently supported on the resilient flanks 221 and 222 so that that the protrusions 212 to 215 do not move out of the recesses 108a to 108d.

The reel cover body 210 may be integrally formed with the resilient member 220 by plastic injection moulding. The reel cover body 210 also has a release protrusion 230 formed thereon. The release protrusion 230 releases the magnetic tape of the cassette tape (not shown) mounted on the reel tables 161 and 162 from a locked state. The release protrusion 230 may also be integrally formed with the reel cover body 210 by plastic injection moulding.

With reference to Figures 4 and 5, the assembling of the reel cover will be described.

The reel cover 200 is placed on the chassis 100 so that the protrusions 212 to 215 of the reel cover 200 are adjacent to the corresponding recesses 108a to 108d of the chassis 100. The resilient flanks 221 and 222 of the resilient member 220 are then deformed to contact with the side surface 102 of the chassis 100 (see Figure 4). Accordingly, the protrusions 212 to 215 are positioned so that they can be fitted in the recesses 108a to 108d.

When the reel cover 200 is placed in the correct position and the protrusions 212 to 215 are fitted into the recesses 108a to 108d, when the external force is removed, the protrusions 212 to 215 are firmly located in the recesses 108a to 108d due to the recovering force of the resilient member 220.

An upper end of the shaft 107 formed on the gear sheet 106 is located in the shaft supporting recess 211 formed in the reel cover 200. This prevents the idle gear assembly 170 from moving out of its normal position.

As described above, the reel cover 200 is assembled with the chassis 100 without requiring separate securing means by only using the protrusions 212 to 215 and the resilient member 220.

Since the reel cover 200 is assembled with the chassis 100 as described above, the number of assembly parts is decreased and the assembly procedure simplified. Accordingly, the productivity is improved and the manufacturing cost decreased.

## Claims

1. A tape deck comprising a chassis (20), first and second reel tables (21,22), a gear (23) movable between the first and the second reel table and a cover (200) over the movable gear (23), **characterised in that** said cover (200) is shaped for fixedly engaging the chassis (20).

2. A tape deck according to claim 1, wherein the cover (200) comprises toes (212, 213, 214, 215) which engage the underside of the chassis (20) to retain the cover (200) in place.

3. A tape deck according to claim 2, comprising apertures through which the toes (212, 213, 214, 215) are inserted for mounting of the cover.

4. A tape deck according to claim 3 wherein the cover (200) comprises resilient retaining means (220) for retaining the toes (212, 213, 214, 215) in the apertures.

5. A tape deck according to claim 4, wherein the resilience of the resilient retaining means (220) is such that the toes (212, 213, 214, 215) can be withdrawn through the apertures when the cover (200) is to be removed.

6. A reel cover for securing an idle gear assembly disposed on a chassis of a magnetic recording/reproducing apparatus, the real cover comprising:
a reel cover body placed on the chassis for supporting the idle gear assembly;
a shaft supporting recess in which a shaft of the idle gear assembly is received;
a plurality of protrusions positioned to be fitted in and supported by a plurality of recesses protrusively formed on positions of the chassis where the idle gear assembly is placed; and
a resilient member positioned to resiliently support the reel cover body urging the protrusions to remain within the recesses.

7. The reel cover as claimed in claim 6, wherein the resilient member is formed integrally with the reel cover body, the resilient member comprising at least two resilient flanks resiliently contacting a side surface of the chassis.

8. The reel cover as claimed in claim 7, wherein the reel cover body and the resilient member comprise a plastic material.

9. The reel cover as claimed in claim 6, wherein the reel cover body comprises a release protrusion for releasing a magnetic tape of a tape cassette mounted on reel tables rotatably disposed on the chassis from a locking state.

10. The reel cover as claimed in claim 9, wherein the release protrusion is formed integrally with the reel cover body by plastic injection molding.

11. A magnetic recording/reproducing apparatus comprising:
a chassis comprising a plurality of recesses;
a pair of reel tables rotatably disposed on the chassis, for mounting a tape reel of a tape cassette thereon;
an idle gear assembly disposed on the chassis and between the reel tables, for selectively transmitting a driving force to the reel tables;
a shaft for supporting the idle gear assembly;
a reel cover body placed on the chassis for supporting the idle gear assembly, the reel cover body comprising a shaft supporting recess and a plurality of protrusions, wherein the shaft of the idle gear assembly is received in the recess, and the plurality of protrusions are fitted in and supported by the plurality of recesses; and
a resilient member positioned to resiliently support the reel cover body urging the protrusions to remain within the recesses.

12. The magnetic recording/reproducing apparatus as claimed in claim 11, wherein the resilient member is formed integrally with the reel cover body and comprises at least two resilient flanks resiliently contacting a side surface of the chassis.

13. A method of manufacturing a reel cover for securing an idle gear assembly disposed on a chassis of a magnetic recording/reproducing apparatus, the method comprising:
forming a reel cover body configured for placement on the chassis to support the idle gear assembly;
forming in the real cover body a shaft supporting recess configured to receive a shaft of the idle gear assembly;
forming a plurality of protrusions positioned on the reel cover body to be fitted in and supported by a plurality of recesses protrusively formed on positions of the chassis where the idle gear assembly is placed; and
forming a resilient member configured to be positioned to resiliently support the reel cover body urging the protrusions to remain within the recesses.

14. The method as claimed in claim 13, wherein the resilient member is formed integrally with the reel cover body, the resilient member comprising at least two resilient flanks configured to resiliently contact a side surface of the chassis.

15. The method as claimed in claim 14, wherein the reel cover body and the resilient member comprise a plastic material.

16. The method as claimed in claim 13, further comprising forming a release protrusion on the reel cover body, wherein the release protrusion is configured to release a magnetic tape of a tape cassette mounted on reel tables rotatably disposed on the chassis from a locking state.

17. The method as claimed in claim 16, wherein the release protrusion is formed integrally with the reel cover body by plastic injection molding.

18. A method of manufacturing a magnetic recording/reproducing apparatus, the method comprising:
forming a chassis comprising a plurality of recesses;
rotatably disposing a pair of reel tables on the chassis for mounting a tape reel of a tape cassette thereon;
disposing an idle gear assembly on the chassis and between the reel tables, for selectively transmitting a driving force to the reel tables;
forming a shaft for supporting the idle gear assembly;
placing a reel cover body on the chassis for supporting the idle gear assembly, the reel cover body comprising a shaft supporting recess and a plurality of protrusions, wherein the shaft of the idle gear assembly is received in the recess, and the plurality of protrusions are fitted in and supported by the plurality of recesses; and
positioning a resilient member to resiliently support the reel cover body urging the protrusions to remain within the recesses.

19. The method as claimed in claim 18, wherein the resilient member is formed integrally with the reel cover body and comprises at least two resilient flanks resiliently contacting a side surface of the chassis.
